(19) Europäisches Patentamt
European Patent Office
Office européen des brevets

(11) **EP 2 321 768 B1**

(12) **EUROPEAN PATENT SPECIFICATION**

(45) Date of publication and mention of the grant of the patent:
**04.10.2023 Bulletin 2023/40**

(21) Application number: **09808511.1**

(22) Date of filing: **20.08.2009**

(51) International Patent Classification (IPC):
**H04N 19/467** (2014.01)   **H04N 19/86** (2014.01)
**H04N 19/176** (2014.01)   **H04N 19/51** (2014.01)
**H04N 19/154** (2014.01)   **H04N 19/48** (2014.01)
**G06T 1/00** (2006.01)

(52) Cooperative Patent Classification (CPC):
**H04N 19/86; G06T 1/0028; H04N 19/154; H04N 19/176; H04N 19/467; H04N 19/48; H04N 19/51;** G06T 2201/0053; G06T 2201/0202

(86) International application number:
**PCT/US2009/004752**

(87) International publication number:
**WO 2010/021722 (25.02.2010 Gazette 2010/08)**

(54) **BLOCKINESS AND FIDELITY IN WATERMARKING**

EINHEITLICHKEIT UND ORIGINALTREUE IN WASSERZEICHEN

BLOCS ET FIDÉLITÉ EN FILIGRANAGE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.08.2008 US 189586 P**

(43) Date of publication of application:
**18.05.2011 Bulletin 2011/20**

(73) Proprietor: **ContentArmor**
**35700 Rennes (FR)**

(72) Inventors:
• **HE, Shan**
**Plainsboro**
**NJ 08536 (US)**
• **BLOOM, Jeffrey Adam**
**West Windsor**
**NJ 08850 (US)**
• **ZOU, Dekun**
**Princeton**
**NJ 08540 (US)**

(74) Representative: **Vidon Brevets & Stratégie**
**16B, rue de Jouanet**
**BP 90333**
**35703 Rennes Cedex 7 (FR)**

(56) References cited:
WO-A1-2008/154041     US-A1- 2002 136 428
US-A1- 2006 078 292     US-A1- 2006 269 096

• DEKUN ZOU ET AL: "H.264/AVC stream replacement technique for video watermarking", ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 1749-1752, XP031250910, ISBN: 978-1-4244-1483-3
• LEONTARIS A ET AL: "Comparison of blocking and blurring metrics for video compression", 2005 IEEE INTERNATIONAL CONFERENCE ON ACOUSTICS, SPEECH, AND SIGNAL PROCESSING - 18-23 MARCH 2005 - PHILADELPHIA, PA, USA, IEEE, PISCATAWAY, NJ, vol. 2, 18 March 2005 (2005-03-18), pages 585-588, XP010790707, DOI: 10.1109/ICASSP.2005.1415472 ISBN: 978-0-7803-8874-1

- COX I J ET AL: "Digital Watermarking , Using Perceptual Models", 1 January 2002 (2002-01-01), DIGITAL WATERMARKING; [SERIES IN MULTIMEDIA INFORMATION AND SYSTEMS], SAN FRANCISCO, CA : MORGAN KAUFMANN, US, PAGE(S) 201 - 240, XP002513478, ISBN: 978-1-55860-714-9 * abstract * * Section 7.3 with sub-section 7.3.1 * * Section 7.4 with sub-section 7.4.1 *
- COX I J ET AL: "Applying Informed Coding and Embedding to Design a Robust High-Capacity Watermark", IEEE TRANSACTIONS ON IMAGE PROCESSING, IEEE SERVICE CENTER, PISCATAWAY, NJ, US, vol. 13, no. 6, 1 June 2004 (2004-06-01), pages 792-807, XP011113085, ISSN: 1057-7149, DOI: 10.1109/TIP.2003.821551

## Description

### Cross Reference

This patent application claims the benefit of and priority to U.S. Provisional Patent Application No. 61/189,586, filed August 20, 2008, and titled "BLOCKINESS AND FIDELITY".

### Field of the Invention

The present invention relates to a process for predicting and characterizing visibility of artifacts associated watermarks using a baseline luminance fidelity model and a blockiness fidelity model.

### Background of the Invention

Watermark embedding in a video stream is often required to be not noticeable, but at times introduces visible artifacts.

Dekun Zou and J.A. Bloom disclose, in "H.264/AVC Stream Replacement Technique for video Watermarking" (Proceedings of the IEEE International conference on Acoustics, Speech and Signal Processing (ICASSP) 2008, PP. 1749-1752), a watermarking technique that operates directly at the bitstream level and that, in essence, modifies selected macroblocks in the frames of the video. While it discusses the visibility/robustness trade-off inherent to watermarking technologies, it remains very vague on how to assess the visibility of such changes. They remain particularly silent on how to capture blocking artefacts that are prone to be introduced by such watermarking techniques and doing so in an efficient manner.

Therefore, a need exists to develop an objective visibility measurement that can identify the changes that will introduce visible artifacts so that watermarks that cause these changes can be avoided.

### Summary of the Invention

The disclosure relates to a method for predicting the visibility of artifacts associated with proposed watermarks in a block-based encoded video according to claim 1.

Additionally, the disclosure pertains to a system for predicting the visibility of artifacts associated with proposed watermarks in a block-based encoded video according to claim 4.

The system can be a video encoder, a decoder, a post-processor processing output from a decoder, a pre-processor providing input to an encoder, or the like, wherein the threshold luminance and blockiness values are levels below which the changes to luminance and the blockiness are not perceptible to a human viewer.

### Brief Description of the Drawings

The invention will now be described by way of example with reference to accompanying drawings.

Figure 1 is a block diagram of a technique that employs a baseline luminance fidelity model based on absolute luminance difference.

Figure 2 is a block diagram of an embodiment of the invention that employs a fidelity model based on absolute luminance difference and blockiness measurements.

Figure 3 is a more detailed embodiment of the invention showing the implementation of fidelity models based on absolute luminance difference and blockiness measurements.

Figure 4 is an illustration of propagation map.

Figure 5 is a block diagram illustrating the construction of propagation map.

Figure 6 is a frame segment being divided for blockiness characterization.

### Description Of The Invention

The invention provides a means for predicting the visibility of artifacts associated with prospective watermarks. The means for predicting visibility are measurements based on luminance fidelity model and a blockiness fidelity model. With these measurements, prospective watermarks which would produce objectionable visible artifacts can be avoided and watermarks which do not produce objectionable or visible artifacts can be employed.

It is important to point out that the invention is particularly useful to H.264/AVC video watermarking or any video encoding in which many blocking artifacts can be introduced by the embedding due to the motion vector change in inter-prediction and reference pixel change in intra-prediction. To avoid these blocking artifacts, a blockiness fidelity measure has been developed and is described in detail later in this specification.

Furthermore, the invention is intended to include modifying a CABAC-encoded H.264/AVC stream and for generating a list of CABAC (Context-based Adaptive Binary Arithmetic Coding)/AVC (Advanced Video Coding) compliant changes. In one embodiment, each entry in the resulting list identifies a specific syntax element, its original value, and a candidate alternative value. A syntax element that appears in this list is considered a *changeable syntax element* and can appear in the list more than once, each time with a different candidate alternative value.

A subset of the entries in this list can be selected and used for watermarking. An embodiment of the invention distinguishes changes that will introduce visible artifacts and those that will not and accordingly label the changes as *visible* or *invisible, respectively,* such that the classification is similar to one preformed by a human observer. Hence, those changes that will introduce visible artifacts can be removed from consideration, thereby leaving a subset of candidate alternative values that can be used to implement an invisible watermark.

## 1. Baseline Luminance Fidelity Model Component

The luminance fidelity model is herein referred to as the baseline fidelity model. As a first approximation, a change will be classified *visible* if it results in a large absolute change of the luminance values in the block directly affected by the change.

In the baseline fidelity model, a visibility measure is compared with a threshold. Consider first, a visibility measure for a single 16×16 macroblock. The visibility measure is the sum of the absolute luminance change within the block. This visibility measure, denoted $AbsDiff_j$ for macroblock j, is formulated as

$$\text{AbsDiff}_j = \sum_{i \in macroblk_j} \left| x_{marked}(i) - x_{org}(i) \right|$$

where $x_{org}(i)$ is the luminance of pixel $i$ in macroblock $j$ of the original, unmarked picture and $x_{marked}(i)$ is the luminance of the same pixel in the watermarked version of the macroblock. For a threshold, $h$, the changes in block $j$ are classified *visible* if $AbsDiff_j \geq h,$ and they are classified *invisible* if $AbsDiff_j < h.$ The changes classified as *visible* can be removed from the embedding list to avoid visual artifacts in the watermarked content. It is important to point out that a lower threshold $h$ will help filter out more visible artifacts. However, it may also filter out many invisible watermarks leading to fewer changeable blocks for embedding. On the other hand, higher threshold can provide more changeable blocks but at the risk of introducing visual artifacts. The threshold can be adjusted to achieve the desired tradeoff.

In H.264/AVC video coding, a change of a block may propagate to other blocks due to intra-prediction and inter-prediction. Thus, in addition to the block directly affected by a change, there may be a number of blocks indirectly affected. These blocks affected by the change are collectively called *propagation path or propagation map*. A *propagation path* is described as how a single change propagates within the same frame.

Propagation mapping capabilities can be integrated in H.264 decoders. As such, propagations maps can be generated which can describe how a single change will propagate through space. An algorithm builds a propagation map to track the affected blocks and their changes. Propagation mapping is useful in many aspects. It can be used to examine the visual distortion resulting from a change. It can be used to avoid (1) changes that may result in overlapping propagation maps, (2) changes that may fall in the propagation path of a previous change or (3) multiple changes that combine such that a third block is affected by both. Propagation maps can be used to improve the detection region when these changes are employed for watermarking.

With digital watermarking being an application that modifies an H.264/AVC encoded video, it is herein recognized that some changes can unexpectedly propagate to other areas of the picture or frame. If a map indicates all of the areas to which a change will propagate, the fidelity assessment can be applied to all of those areas. An additional concern in watermarking is that one may want to make multiple changes in a slice of a block. In watermarking it is important to know what effect a change will have on the decoded imagery and often this is expressed as a change from the unmarked version of the content. However, if a previous change has already propagated to the current region and another change is made, the resulting decoded imagery may include the effects of both changes. If the first change is known, then the result can be predicted, but one may not know a priori whether or not the first change will be employed. If a map were constructed indicating all of the areas to which a change will propagate, then one can avoid making other changes inside of that propagation path. A combination of these two problems can also occur. If a region of a picture is modified indirectly, because a change in a different region has propagated to the current region, the current region can be examined in an assessment of the fidelity impact of that change. However, it is possible that there are multiple changes, all of which can propagate into the current region. If maps of the propagation paths of all the changes are available, one can identify the regions of overlapping propagation and can consider all combinations of impacts.

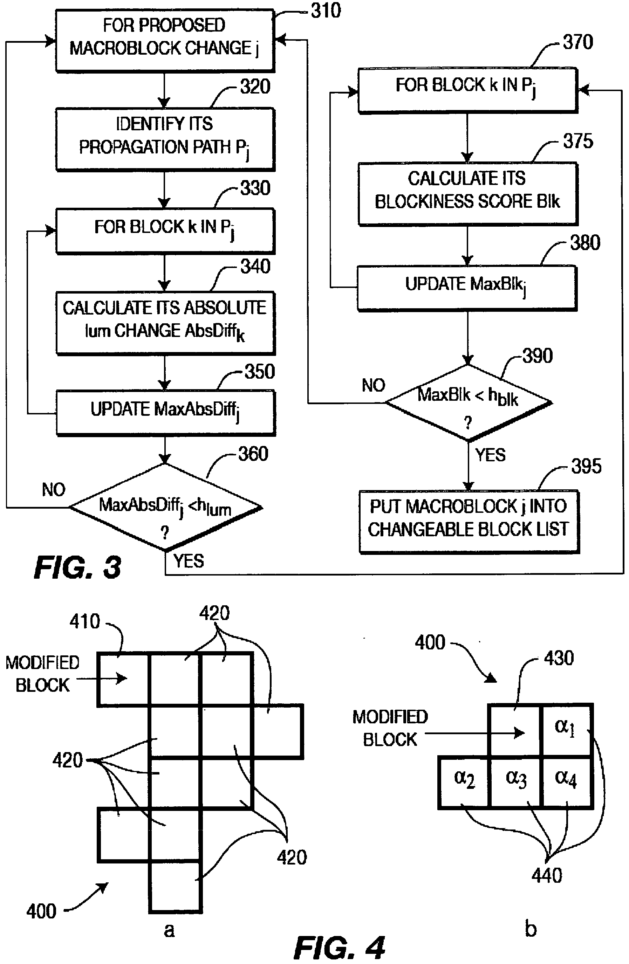

Figure 4(a) shows an example propagation map. This propagation map 400 is associated with one block 410 whose motion vector has been directly changed. The other blocks 420 in the figure are blocks that will be indirectly changed due to propagation. When a block changes, either due to a direct modification or because it falls in the propagation path of another change, the change has the potential to further propagate to its neighbors. Figure 4(b) illustrates the four neighbors 440 whose luminance values might be modified due to this propagation, when only one block 430 was directly changed. The propagation map, P, of a changed block represents a collection of the blocks, p, whose luminance values are also changed due to propagation. Each block in the propagation map is represented with a data structure indicating the initial change, the prediction mode of the current block, and the change in the current block and is denoted as:

$$p = \{head\_node\_info, mode, cur\_node\_info\}.$$

The "head_node" uniquely identifies the changed block in terms of position and the alternative value of the motion vector that initiated the changes. All of the nodes in the propagation map P will have the same "head_node." The element "mode" indicates the prediction mode of the current block, which can be either intra-prediction or inter-prediction. The element "cur_node" records the information about the current block. The "cur_node" contains the original and new motion vectors for inter-predicted blocks and intra-prediction mode and reference blocks for intra-prediction blocks.

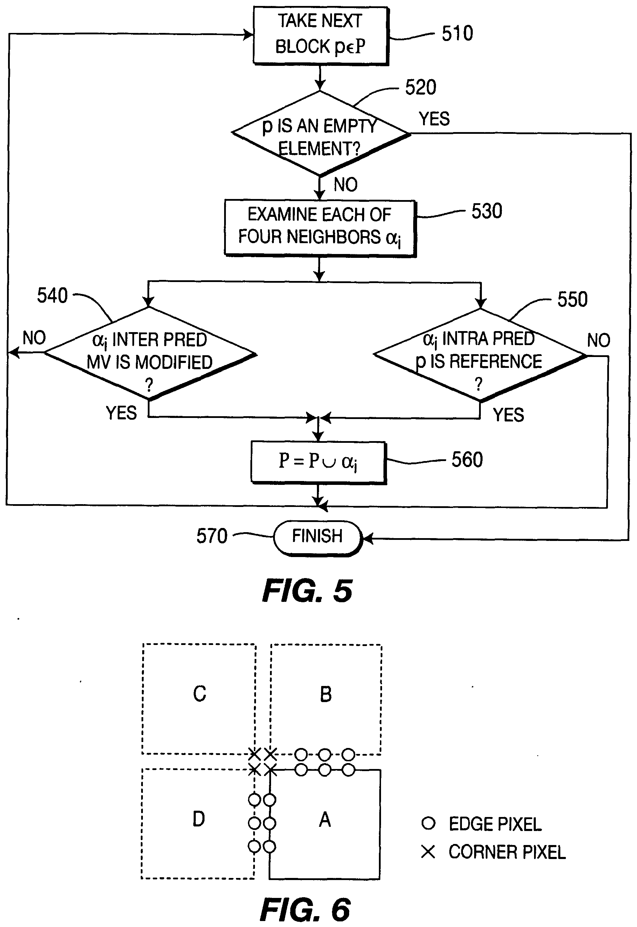

Figure 5 shows a method for constructing the propagation map. The propagation map, P, is initialized with the changed block p in box 510. Then at evaluation box 520, a determination is made to evaluate whether block p is empty. If block p is not empty, then each of the block p neighbors $\alpha_i$, i = 1, ..., 4 is examined in examination box 530. For the example configuration in Figure 4b block p has 4 neighbors. The goal of each of these examinations is to determine if the change to block p will propagate to neighbor $\alpha_i$. To do this, the decoding using the original values associated with p as well as the changed values can be compared. If block $\alpha_i$ is an inter-predicted block, then in the inter-prediction pathway 540, one can examine the motion vector predicted using the new motion vector of p and those of the other neighbor blocks. If it is different from the original motion vector, then the change will propagate to this neighbor and block $\alpha_i$ is appended to the propagation map P in the propagation box 560. If $\alpha_i$ is intra-predicted in the intra-predicted pathway 550 and block p is used as the reference in the prediction, then the change will propagate to this neighbor and block $\alpha_i$ is appended to the propagation map P in the propagation box 560. After all the four neighbors have been examined, the next element in P is considered. This process repeats until there are no new elements in P to arrive at finish box 570.

The invention is intended to include the feature of propagation mapping being integrated into an H.264 decoder in the context of watermarking system in which a previous step has created a list of potential modifications, wherein each potential modification consists of a block identifier, an indication of which motion vector can be modified, and the alternative value for that motion vector. Note that, at this point, there can be a number of potential modifications for a single block. In a later step, the list of potential modifications can preferably be pruned so that no block has more than one modification.

The propagation map P can be represented as a linked list, which, as a whole, will identify the macroblocks/partitions affected by the potential modification. As the decoder processes the macroblocks of B slices (in raster scan order), one can keep adding affected macroblocks/partitions to the corresponding linked lists.

A preferred detailed integrated algorithm will now be described, which is the integration of propagation mapping with an AVC decoder. Given a list of potential modifications in a B-slice containing I entries, each corresponding to a modifiable motion vector with one alternative, I linked lists can be constructed and each list can be initialized to contain one node, the potential modification itself. The sample data structure of the node p is shown in Table 1, which contains the location information of the macroblock/partition, original and new motion vector information.

**TABLE 1: Data structure of the linked list for each propagation map**

struct propagation map_node

```
{
    next;    // pointer to next node


    /* macroblock/partition information of current block*/
    mbAddr;        // the address of the macroblock w.r.t. the beginning of
the frame measured
            // in the raster scan order
    mbPartIdx;      // the partition index.
    subMbPartIdx; // the sub-macroblock partition index.


    /* motion related information corresponding to the modified motion
vector */
    MVorg_x;       // x component of the original motion vector of the
current block.
    MVorg_y;       // y component of the original motion vector of the
current block.
    MVnew_x;       // x component of the modified motion vector of the
current block.
    MVnew_y;       // y component of the modified motion vector of the
current block.
    refFrmNum;     // the frame number of the reference frame used for
motion compensation
    list_id;   // 0 or 1, indicate the list whose motion vector has been
modified.
    ref_idx; // the index of reference frame in list list_id
    MVWeight;      // the weight of the motion-compensated prediction


/* intra-predicted block */
    Intra-prediction mode;        // -1 for inter prediction, >= 0 for intra
prediction
    Involved neighbors;    // record the neighbor blocks involved in the
prediction for further analysis


    /* other information */
    ......

}
```

Since the process of propagation map building can be integrated into the AVC decoder, most of this information can be directly obtained from the decoder. Other information can be added based on the application of the propagation map.

Now with an understanding of the building of a propagation map, a situation in which a change does not introduce a visible artifact in the block directly affected can be considered, but, as the changes propagate to other blocks, an artifact can be introduced in one of the blocks along the propagation path. Thus, in at least one example, it is important to consider all blocks on the propagation path, not just the block directly affected, when classifying a change.

The luminance visibility measure is easily extended to account for artifacts introduced into the propagation path of a proposed change. To do this, the visibility measure is calculated for every macroblock in the propagation path of a proposed change and a visible measure is derived from all of these. One example of a visibility measure for a propagation path is the worst case (maximum) value. This measure can be denoted $\text{MaxAbsDiff}_k$ for proposed change k and is formulated as

$$\text{MaxAbsDiff}_k = \underset{j \in \text{PropPath}_k}{Max}\left( \sum_{i \in macroblk_j}\left| x_{marked}(i) - x_{org}(i) \right| \right).$$

The advantages of this fidelity model are that the fidelity score is easy to calculate and does not introduce much computational cost.

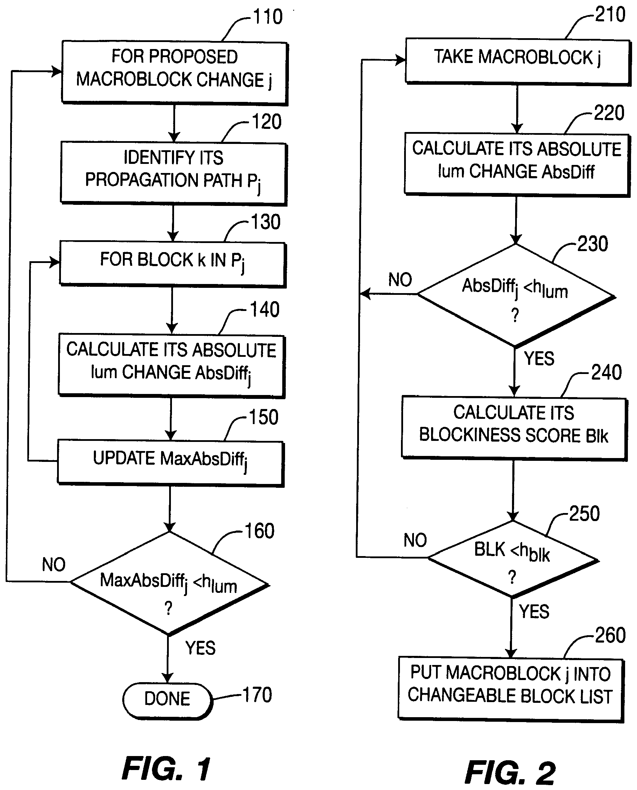

Figure 1 shows a block diagram of a luminance fidelity model in which proposed macroblock changes j are first made in box 110. This is followed by identifying the *propagation path* associated with the change in box 120 and considering each of the blocks in the propagation path in box 130. Next, this is followed by calculating or determining absolute luminance change for the blocks in box 140 and determining the worst case value for the macroblock in box 150 and recording or updating the data for each of the macroblocks until each of the macroblocks in block k have been calculated in box 150. If the worst case value is less than the luminance visibility threshold in box 160, then the proposed macroblock changes will be accepted in box 170 and if the worst case value is not less than the luminance visibility threshold, then other proposed macroblock changes will be considered in box 110 and similarly run through the block diagram until acceptable changes are identified.

## 2. Blockiness Fidelity Model

The baseline fidelity model works well, but there are classes of changes that introduce visible artifacts without introducing large luminance changes. The baseline model is limited to finding only those artifacts that are due to large luminance changes.

A second class of artifacts that can be seen by the H.264/AVC watermarking can be *blocking* artifacts.

A blocking artifact is visible when the pixel values on the edges of a block are correlated with the adjacent pixel values on the corresponding edges of the adjacent blocks in the original picture, but become significantly uncorrelated with those adjacent pixels in the watermarked picture. In this case, a viewer can perceive the edges of the block. When this artifact occurs on all four edges of a block, the artifact appears as an erroneous block of data and is thus called a blocking artifact. The blockiness fidelity model incorporates a blockiness measure in addition to the luminance measure. Changes that cause a high blockiness measurement value or blockiness score are labeled as visible. In other words, the blockiness measure is how blocky the content becomes after certain processing (e.g. compression, watermarking) compared with the original content. If the original content is smooth and the generated content is blocky, then this particular operation will receive a high blockiness score. If the original content is blocky and the processed content is also blocky, then this particular operation will receive low blockiness score. In other words, the blockiness score measures how much blocky artifacts introduced by the processing. By compare the blockiness score with a threshold, the blocks with visible artifacts can be indentified and can be removed, accordingly. The blockiness measure is performed block by block. As shown in Figure 6, for each n $\times$ n block A, one can calculate its blocky metric BM and block gradient metric BGM to obtain its final blockiness score. To calculate the BM, one first calculates the blocky metric for each pixel as follows. A metric pi can be for horizontal edge pixel i = 2,.., n-1, wherein

$q_i = (B \text{ bottom edge pixel } i - A \text{ top edge pixel } i);$

$\text{if } |q_{i\_ori}| < |q_{i\_processed}| \;\&\&\; |q_{i\_processed}| - |q_{i\_ori}| < 64$

$\qquad p_i = |q_{i\_processed}| - |q_{i\_ori}|;$

else

$$p_i = 0;$$

$p_i \Rightarrow$ B bottom edge pixel i and A top edge pixel i.

A metric $p_i$ can be for vertical edge pixel i = 2,.., n-1, wherein

$q_i = $ (D right edge pixel i - A left edge pixel i);

if $|q_{i\_ori}| < |q_{i\_processed}|$ && $|q_{i\_processed}| - |q_{i\_ori}| < 64$

$$p_i = |q_{i\_processed}| - |q_{i\_ori}|;$$

else

$$p_i = 0;$$

$p_i \Rightarrow$ D right edge pixel i and A left edge pixel i.

A metric p can be for diagonal corner pixel, wherein

$q = $ (C lower right corner pixel - A upper left pixel);

if $|q_{\_ori}| < |q_{\_processed}|$ && $|q_{\_processed}| - |q_{\_ori}| < 64$

$$p = |q_{\_processed}| - |q_{\_ori}|;$$

else

$$p = 0;$$

$p \Rightarrow$ C lower right corner pixel and A upper left pixel.

A metric p can be for off-diagonal corner pixel:

$q = $ (D upper right corner pixel - B lower left pixel );

if $|q_{\_ori}| < |q_{\_processed}|$ && $|q_{\_processed}| - |q_{\_ori}| < 64$

$$p = |q_{\_processed}| - |q_{\_ori}|;$$

else

$$p = 0;$$

$p \Rightarrow$ D upper right corner pixel and B lower left pixel.

$$BM = \max \left( abs\left( \sum_{i \in top\_row} p_i \right), abs\left( \sum_{i \in bottom\_row} p_i \right), abs\left( \sum_{i \in left\_column} p_i \right), abs\left( \sum_{i \in right\_column} p_i \right) \right) / n.$$

BGM is calculated by taking the average of the horizontal and vertical maximum gradient among original block and processed block. For pixels in one block $x_{ij}$, i=1,...,n, j=1,...,n, BGM=

$$\left( \sum_{i,j} \max\left( x_{i+1j,ori} - x_{ij,ori}, x_{i+1j,proc} - x_{ij,proc} \right) + \sum_{i,j} \max\left( x_{ij+1,ori} - x_{ij,ori}, x_{ij+1,proc} - x_{ij,proc} \right) \right) / 2n(n-1)$$

.

Finally, the blockiness score for each n × n block is obtained as max(0, BM-BGM).

Since the BD+/AVC watermark is embedded macroblock by macroblock, a natural thinking would be to calculate the blockiness score using 16 as block size. However, the blocks on the propagation map of the change may not necessarily be 16×16. Due to the inter and intra prediction mode, the block size can be 16×8, 8×16, 8×8, and 4×4. If one uses a large n, e.g.16, as the block size, then the macroblocks where only one of the 8×8 or 4×4 sub-blocks is changed may end up having a low blockiness score even though the changed sub-block is quite blocky. Therefore, the smallest possible block size, 4×4 should be used to calculate the blockiness score and then to sum them to obtain the final score for each 16×16 macroblock. Note that using a smaller block size to calculate the blockiness score has the same computational complexity as the large block size.

By summing the blockiness score of 4×4 sub-blocks to obtain the final score of the macroblock, one takes into account the area of the blocky artifacts. If, for example, all the 16 4×4 blocks have non-zero blockiness score, it means the entire 16×16 macroblock has s blocky artifact and may be more visible than the case where only one sub-block having non-zero score. Alternatively, the highest score from the 16 sub-blocks as the final score for the macroblock can be selected.

This blockiness measure can be applied to any rectangular, or at least piecewise linear, closed region such as a typical block. There are many ways that this can be used in various implementations. Since the BD+/AVC watermark is embedded macroblock by macroblock, a reasonable way would be to calculate the blockiness score using 16×16 as the block size. However, the blocks on the propagation path of the change are not necessarily 16×16. Depending on the inter- and intra-prediction modes, the block size can be 16×8, 8×16, 8×8, or 4×4. If one uses a large block size, e.g.16, then the macroblocks where only one of the 8×8 or 4×4 sub-blocks is changed may end up having a low blockiness score even though the changed sub-block is quite blocky.

At least one disclosed implementation uses the smallest possible block size, 4×4, to calculate the blockiness score, and then add up the scores from the 16 adjacent 4×4 blocks to obtain the final score for each 16×16 macroblock. Note that using a smaller block size to calculate the blockiness score has the same computational complexity as the large block size.

By summing up the blockiness score of 4×4 sub-blocks to obtain the final score of the macroblock, one takes into account the area of the blocky artifacts. If, for example, each of the 16 4×4 blocks has a non-zero blockiness score, it means the entire 16×16 macroblock has blocking artifacts which may be more visible than the case where only one sub-block has a non-zero score. An alternative embodiment is to select the highest score from the 16 sub-blocks as the final score for the macroblock. By doing that, one focuses on the 4x4 block with the highest blockiness score, which most likely will cause visual artifact.

Figure 2 is a block diagram of the blockiness fidelity model based on both absolute luminance difference and blockiness measure. In this model, one compares the luminance measure with a threshold. First, a change to macroblock j is considered in box 210 and the absolute luminance change associated with the change is calculated in box 220. Changes that result in a luminance measure that exceeds the threshold are classified as visible in decision box 230. If the absolute luminance change is visible, then in decision box 230, one considers another change in macroblock j in box 210. On the other hand, if the change is not visible by the luminance measure in 230, then a blockiness score is calculated. The blockiness score is then compared with a blockiness threshold in decision box 250. Changes that result in a blockiness score that exceeds the blockiness threshold are classified as visible; as such, they are not placed in a changeable block list and another change is then considered in box 210. Those changes that result in both a luminance measure that is below the luminance threshold and a blockiness score that is below the blockiness threshold are classified as not visible and are placed in the allowed changeable block list in box 260.

Figure 3 shows a detailed block diagram of an enhanced fidelity model in which a proposed macroblock change j is first made in box 310. This is followed by identifying the *propagation path* associated with the change in box 320 and considering each of the blocks in the propagation path in box 330. Next, this is followed by calculating the absolute luminance change for the blocks in 340 and determining the worst case value for the macroblock in box 350. This visibility measure for a propagation path is the worst case (maximum) value. If the worst case value is less than the luminance visibility threshold in decision box 360, then the proposed macroblock change will be accepted and the process is advanced to box 370 to consider the accepted proposed macroblock from box 360. If the worst case value is not less than the luminance visibility threshold in box 360, then another proposed macroblock change j will be considered in box 310. Once a macroblock change is advanced to box 370, the process advances to calculating the blockiness score in box 375 and determining the maximum blockiness value in box 380. The blockiness score in box 375 is compared with a blockiness threshold in decision box 390. Changes that result in a blockiness score that exceeds the blockiness threshold are classified as visible, and as such, are not placed in a changeable block list. Rather another change is then considered in box 310. Those changes that result in both a luminance measure that is below the luminance threshold and a blockiness score that is below the blockiness threshold are classified as not visible and are placed in the allowed changeable block list in box 395.

Similar to the baseline mode, the visibility measure is used to account for artifacts introduced along the propagation path of a proposed change. The blockiness score is calculated for every macroblock in the propagation path of a proposed change and the maximum value is used. This measure is denoted as MaxBlk$_k$ for proposed change k and is formulated as

$$\mathrm{MaxBlk}_k = \underset{j \in \mathrm{Pr}opPath_k}{Max}\left(Blk_j\right),$$

where $Blk_j$ is the blockiness score for block $j$. Here MaxBlk$_k$ is compared with the blockiness threshold to determine if the proposed change k could introduce visible artifacts.

Several of the implementations and features described in this application may be used in the context of the H.264/MPEG-4 AVC (AVC) standard. However, these implementations and features may be used in the context of another standard (existing or future), or in a context that does not involve a standard.

The embodiments described herein may be implemented in, for example, a method or process, an apparatus, a software program, a datastream, or a signal. Even if only discussed in the context of a single form of implementation such as a method, the implementation or features discussed may also be implemented in other forms such as an apparatus or program. An apparatus may be implemented in, for example, appropriate hardware, software, and firmware. The methods may be implemented in, for example, an apparatus such as, for example, a computer or other processing device. Additionally, the methods may be implemented by instructions being performed by a processing device or other apparatus, and such instructions may be stored on a computer readable medium such as, for example, a CD, or other computer readable storage device, or an integrated circuit. Further, a computer readable medium may store the data values produced by an implementation.

As should be evident to one of skill in the art, implementations may also produce a signal formatted to carry information that may be, for example, stored or transmitted. The information may include, for example, instructions for performing a method, or data produced by one of the described implementations. For example, a signal may be formatted to carry a watermarked stream, an unwatermarked stream, a fidelity measure, or other watermarking information.

Additionally, in some case the metrics and methods disclosed herein can be used to keep or select watermarks or changes because they will be visible to a human observer.

Additionally, many embodiments may be implemented in one or more of an encoder, a decoder, a post-processor processing output from a decoder, or a pre-processor providing input to an encoder. Further, other implementations are contemplated by this disclosure. For example, additional implementations may be created by combining, deleting, modifying, or supplementing various features of the disclosed implementations. Such additional implementations are considered to belong to the invention only if they fall under the scope of the appended claims. Indeed, the scope of the invention is defined by the appended claims.

**Claims**

1.  A method for predicting the visibility of artifacts associated with proposed watermarks in a block-based encoded video comprising:

    providing a plurality of proposed macroblock changes, associated with the proposed watermarks;
    determining (220) an absolute luminance difference for at least one of the proposed macroblock change;
    determining (230) if the proposed macroblock change is visible based on the absolute luminance difference;
    the method being **characterized in that** it further comprises:

    determining (240) a blockiness score of the proposed macroblock change if the proposed macroblock change is not visible based on the absolute luminance difference;
    determining (250) if the proposed macroblock change is visible based on the blockiness score; and
    adding (260) the proposed macroblock change to a list of acceptable changes if the proposed macroblock change is further not visible based on the blockiness score.

**2.** The method of claim 1:

wherein determining (220, 340) an absolute luminance difference further comprises:

establishing (320, 330) a propagation map which determines each of the blocks within a same frame of the video that are affected by the proposed macroblock change;
collecting an absolute luminance difference for each block in the propagation map;

and wherein determining (230, 360) if the proposed macroblock change is visible based on the absolute luminance difference further comprises comparing the maximum of the collected absolute luminance differences in the propagation map to a luminance threshold for visibility.

**3.** The method of claim 2 comprising:

wherein determining (375) a blockiness score of the proposed macroblock change further comprises collecting a blockiness score for each block in the propagation map; and
wherein determining (390) if the proposed macroblock change is visible based on the blockiness score further comprises comparing the maximum blockiness score in the propagation map to a blockiness threshold for visibility, wherein proposed macroblock changes that do not exceed the visibility threshold for luminance threshold for visibility and blockiness threshold for visibility are added to the list of acceptable changes.

**4.** A system for predicting the visibility of artifacts associated with proposed watermarks in a block-based encoded video comprising:

a processor adapted to collect or generate a plurality of proposed macroblock changes, associated with the proposed watermarks;
a luminance calculator adapted to calculate an absolute luminance difference for at least one of the proposed macroblock change;
the system being **characterized in that** it further comprises
a blockiness calculator adapted to calculate a blockiness score of the proposed macroblock change if the proposed macroblock change is not visible based on the absolute luminance difference; and
a list collector adapted to collect proposed macroblock changes that are not visible based on absolute luminance difference and on the blockiness score.

**5.** The system of claim 4 wherein the system is a video encoder, a decoder, a post-processor processing output from a decoder, or a pre-processor providing input to an encoder.

**6.** The system of claim 4 or claim 5

wherein the processor is adapted to generate a propagation map which determines each of the blocks within a same frame of the video that are affected by the proposed macroblock change;
wherein the luminance calculator is adapted to collect the absolute luminance difference for each block in the propagation map and to compare the maximum of the collected absolute luminance differences in the propagation map to a luminance threshold for visibility;
and wherein the blockiness calculator is adapted to collect the blockiness score for each block in the propagation map and to compare the maximum of the collected blockiness scores in the propagation map to a blockiness threshold for visibility.

**7.** The system of claim 6 wherein the luminance threshold and blockiness threshold are levels below which changes to the luminance and blockiness are not perceptible by a human viewer.

**8.** The system of claim 6 wherein the list collector or processor is adapted to identify a proposed macroblock change as a specific syntax element, an original value, and a candidate alternative value.

**9.** The system of claim 6 wherein the processor is adapted to watermark the video using a list of proposed macroblock changes that are not visible based on the absolute luminance difference and blockiness score.

**Patentansprüche**

1. Verfahren zur Vorhersage der Sichtbarkeit von Artefakten, die mit vorgeschlagenen Wasserzeichen in einem blockbasiert kodierten Video verbunden sind, umfassend:

   Bereitstellen mehrerer vorgeschlagener Makroblockänderungen, die mit den vorgeschlagenen Wasserzeichen verbunden sind;
   Bestimmen (220) einer absoluten Luminanzdifferenz für mindestens eine der vorgeschlagenen Makroblockänderungen;
   Bestimmen (230), ob die vorgeschlagene Makroblockänderung sichtbar ist, basierend auf der absoluten Luminanzdifferenz;
   wobei das Verfahren **dadurch gekennzeichnet ist, dass** es ferner umfasst:

   Bestimmen (240) einer Blockigkeitsbewertung der vorgeschlagenen Makroblockänderung, wenn die vorgeschlagene Makroblockänderung nicht sichtbar ist, basierend auf der absoluten Luminanzdifferenz;
   Bestimmen (250), ob die vorgeschlagene Makroblockänderung sichtbar ist, basierend auf der Blockigkeitsbewertung; und
   Hinzufügen (260) der vorgeschlagenen Makroblockänderung zu einer Liste akzeptabler Änderungen, wenn die vorgeschlagene Makroblockänderung weiterhin nicht sichtbar ist, basierend auf der Blockigkeitsbewertung.

2. Verfahren nach Anspruch 1:

   wobei das Bestimmen (220, 340) einer absoluten Luminanzdifferenz ferner umfasst:

   Erstellen (320, 330) einer Ausbreitungskarte, die jeden der Blöcke innerhalb desselben Einzelbildes des Videos bestimmt, die von der vorgeschlagenen Makroblockänderung betroffen sind;
   Sammeln einer absoluten Luminanzdifferenz für jeden Block in der Ausbreitungskarte;

   und wobei das Bestimmen (230, 360), ob die vorgeschlagene Makroblockänderung sichtbar ist, auf der Grundlage der absoluten Luminanzdifferenz ferner ein Vergleichen des Maximums der gesammelten absoluten Luminanzdifferenzen in der Ausbreitungskarte mit einem Luminanzschwellenwert für die Sichtbarkeit umfasst.

3. Verfahren nach Anspruch 2, umfassend:

   wobei das Bestimmen (375) einer Blockigkeitsbewertung der vorgeschlagenen Makroblockänderung ferner ein Sammeln einer Blockigkeitsbewertung für jeden Block in der Ausbreitungskarte umfasst; und
   wobei das Bestimmen (390), ob die vorgeschlagene Makroblockänderung sichtbar ist, basierend auf der Blockigkeitsbewertung ferner ein Vergleichen des Maximums der Blockigkeitsbewertung in der Ausbreitungskarte mit einem Blockigkeitsschwellenwert für die Sichtbarkeit umfasst, wobei vorgeschlagene Makroblockänderungen, die den Sichtbarkeitsschwellenwert für den Luminanzschwellenwert für die Sichtbarkeit und den Blockigkeitsschwellenwert für die Sichtbarkeit nicht überschreiten, zu der Liste der akzeptablen Änderungen hinzugefügt werden.

4. System zur Vorhersage der Sichtbarkeit von Artefakten, die mit vorgeschlagenen Wasserzeichen in einem blockbasiert kodierten Video verbunden sind, umfassend:

   einen Prozessor, der geeignet ist, mehrere vorgeschlagene Makroblockänderungen zu sammeln oder zu erzeugen, die mit den vorgeschlagenen Wasserzeichen verbunden sind;
   einen Luminanzrechner, der dazu ausgelegt ist, eine absolute Luminanzdifferenz für mindestens eine der vorgeschlagenen Makroblockänderungen zu berechnen;
   wobei das System **dadurch gekennzeichnet ist, dass** es ferner umfasst
   einen Blockigkeitsrechner, der angepasst ist, um eine Blockigkeitsbewertung der vorgeschlagenen Makroblockänderung zu berechnen, wenn die vorgeschlagene Makroblockänderung nicht sichtbar ist, basierend auf der absoluten Luminanzdifferenz; und
   einen Listensammler, der angepasst ist, um vorgeschlagene Makroblockänderungen zu sammeln, die nicht sichtbar sind, basierend auf der absoluten Luminanzdifferenz und auf der Blockigkeitsbewertung.

**5.** System nach Anspruch 4, wobei es sich bei dem System um einen Video-Kodierer, einen Dekodierer, einen Postprozessor, der die Ausgabe eines Dekodierers verarbeitet, oder einen Vorprozessor, der eine Eingabe für einen Kodierer bereitstellt, handelt.

**6.** System nach Anspruch 4 oder Anspruch 5

wobei der Prozessor dazu ausgelegt ist, eine Ausbreitungskarte zu erzeugen, die jeden der Blöcke innerhalb desselben Einzelbildes des Videos bestimmt, die von der vorgeschlagenen Makroblockänderung betroffen sind; wobei der Luminanzrechner dazu ausgelegt ist, die absolute Luminanzdifferenz für jeden Block in der Ausbreitungskarte zu sammeln und das Maximum der gesammelten absoluten Luminanzdifferenzen in der Ausbreitungskarte mit einem Luminanzschwellenwert für die Sichtbarkeit zu vergleichen; und wobei der Blockigkeitsrechner dazu ausgelegt ist, die Blockigkeitsbewertung für jeden Block in der Ausbreitungskarte zu sammeln und das Maximum der gesammelten Blockigkeitsbewertungen in der Ausbreitungskarte mit einem Blockigkeitsschwellenwert für die Sichtbarkeit zu vergleichen.

**7.** System nach Anspruch 6, wobei der Luminanzschwellenwert und der Blockigkeitsschwellenwert Werte sind, unterhalb derer Änderungen der Luminanz und der Blockigkeit für einen menschlichen Betrachter nicht wahrnehmbar sind.

**8.** System nach Anspruch 6, wobei der Listensammler oder Prozessor dazu ausgelegt ist, eine vorgeschlagene Makroblockänderung als ein spezifisches Syntaxelement, einen Originalwert und einen alternativen Kandidatenwert zu identifizieren.

**9.** System nach Anspruch 6, wobei der Prozessor dazu ausgelegt ist, das Video mit einem Wasserzeichen zu versehen, indem er eine Liste von vorgeschlagenen Makroblockänderungen verwendet, die basierend auf der absoluten Luminanzdifferenz und der Blockigkeitsbewertung nicht sichtbar sind.


**Revendications**

**1.** Procédé de prédiction de la visibilité d'artefacts associés à des filigranes proposés dans une vidéo codée à base de blocs, comprenant :

la fourniture d'une pluralité de changements de macro-bloc proposés, associés aux filigranes proposés ; la détermination (220) d'une différence de luminance absolue pour au moins un des changements de macro-bloc proposés ; la détermination (230) si le changement de macro-bloc proposé est visible sur la base de la différence de luminance absolue ; le procédé étant **caractérisé en ce qu'**il comprend en outre :

la détermination (240) d'un score d'effet bloc du changement de macro-bloc proposé si le changement de macro-bloc proposé n'est pas visible sur la base de la différence de luminance absolue ; la détermination (250) si le changement de macro-bloc proposé est visible sur la base du score d'effet bloc ; et l'ajout (260) du changement de macro-bloc proposé à une liste de changements acceptables si le changement de macro-bloc proposé n'est en outre pas visible sur la base du score d'effet bloc.

**2.** Procédé selon la revendication 1 :
dans lequel la détermination (220, 340) d'une différence de luminance absolue comprend en outre :

l'établissement (320, 330) d'une carte de propagation qui détermine chacun des blocs à l'intérieur d'une même trame de la vidéo qui sont affectés par le changement de macro-bloc proposé ; la collecte d'une différence de luminance absolue pour chaque bloc dans la carte de propagation ; et dans lequel la détermination (230, 360) si le changement de macro-bloc proposé est visible sur la base de la différence de luminance absolue comprend en outre la comparaison du maximum des différences de luminance absolue collectées dans la carte de propagation à un seuil de luminance pour une visibilité.

**3.** Procédé selon la revendication 2, comprenant :

dans lequel la détermination (375) d'un score d'effet bloc du changement de macro-bloc proposé comprend en outre la collecte d'un score d'effet bloc pour chaque bloc dans la carte de propagation ; et
dans lequel la détermination (390) si le changement de macro-bloc proposé est visible sur la base du score d'effet bloc comprend en outre la comparaison du score d'effet bloc maximale dans la carte de propagation à un seuil d'effet bloc pour une visibilité, dans lequel des changements de macro-bloc proposés qui ne dépassent pas le seuil de visibilité pour un seuil de luminance pour une visibilité et un seuil d'effet bloc pour une visibilité sont ajoutés à la liste de changements acceptables.

4. Système pour la prédiction de la visibilité d'artefacts associés à des filigranes proposés dans une vidéo codée à base de blocs, comprenant :

un processeur adapté pour collecter ou générer une pluralité de changements de macro-bloc proposés, associés aux filigranes proposés ;
un calculateur de luminance adapté pour calculer une différence de luminance absolue pour au moins un des changements de macro-bloc proposés ;
le système étant **caractérisé en ce qu'**il comprend en outre
un calculateur d'effet bloc adapté pour calculer un score d'effet bloc du changement de macro-bloc proposé si le changement de macro-bloc proposé n'est pas visible sur la base de la différence de luminance absolue ; et
un collecteur de liste adapté pour collecter des changements de macro-bloc proposés qui ne sont pas visibles sur la base d'une différence de luminance absolue et du score d'effet bloc.

5. Système selon la revendication 4, dans lequel le système est un codeur vidéo, un décodeur, un post-processeur traitant une sortie provenant d'un décodeur, ou un préprocesseur traitant une entrée vers un codeur.

6. Système selon la revendication 4 ou la revendication 5,

dans lequel le processeur est adapté pour générer une carte de propagation qui détermine chacun des blocs à l'intérieur d'une même trame de la vidéo qui sont affectés par le changement de macro-bloc proposé ;
dans lequel le calculateur de luminance est adapté pour collecter la différence de luminance absolue pour chaque bloc dans la carte de propagation et pour comparer le maximum des différences de luminance absolue collectées dans la carte de propagation à un seuil de luminance pour une visibilité ;
et dans lequel le calculateur d'effet bloc est adapté pour collecter le score d'effet bloc pour chaque bloc dans la carte de propagation et pour comparer le maximum des scores d'effet bloc collectés dans la carte de propagation à un seuil d'effet bloc pour une visibilité.

7. Système selon la revendication 6, dans lequel le seuil de luminance et le seuil d'effet bloc sont des niveaux au-dessous desquels des changements sur la luminance et l'effet bloc ne sont pas perceptibles par l'œil humain.

8. Système selon la revendication 6, dans lequel le collecteur de liste ou le processeur est adapté pour identifier un changement de macro-bloc proposé comme un élément de syntaxe spécifique, une valeur originale et une valeur alternative candidate.

9. Système selon la revendication 6, dans lequel le processeur est adapté pour filigraner la vidéo en utilisant une liste de changements de macro-bloc proposés qui ne sont pas visibles sur la base de la différence de luminance absolue et du score d'effet bloc.

**FIG. 1**

**FIG. 2**

FOR PROPOSED
MACROBLOCK CHANGE j —310

↓ 320

IDENTIFY ITS
PROPAGATION PATH $P_j$

↓ 330

FOR BLOCK k IN $P_j$

↓ 340

CALCULATE ITS ABSOLUTE
lum CHANGE $AbsDiff_k$

↓ 350

UPDATE $MaxAbsDiff_j$

↓ 360

NO ← MaxAbsDiff_j < $h_{lum}$ ?

YES

---

FOR BLOCK k IN $P_j$ —370

↓ 375

CALCULATE ITS
BLOCKINESS SCORE Blk

↓ 380

UPDATE $MaxBlk_j$

↓ 390

NO ← MaxBlk < $h_{blk}$ ?

YES ↓ 395

PUT MACROBLOCK j INTO
CHANGEABLE BLOCK LIST

**FIG. 3**

410 — 420

MODIFIED
BLOCK →

420

420

400 —

420

a

400 — 430

MODIFIED
BLOCK → $\alpha_1$

$\alpha_2$  $\alpha_3$  $\alpha_4$

440

b

**FIG. 4**

TAKE NEXT
BLOCK p∈P — 510

p IS AN EMPTY
ELEMENT? — 520

YES

NO

EXAMINE EACH OF
FOUR NEIGHBORS $\alpha_i$ — 530

540

NO

$\alpha_i$ INTER PRED
MV IS MODIFIED
?

YES

550

$\alpha_i$ INTRA PRED
p IS REFERENCE
?

NO

YES

$P = P \cup \alpha_i$ — 560

570 — FINISH

**FIG. 5**

C

B

D

A

O EDGE PIXEL
X CORNER PIXEL

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61189586

**Non-patent literature cited in the description**

- **DEKUN ZOU ; J.A. BLOOM.** H.264/AVC Stream Replacement Technique for video Watermarking. *Proceedings of the IEEE International conference on Acoustics, Speech and Signal Processing (ICASSP),* 2008, 1749-1752